# EUROPEAN PATENT APPLICATION

(11) **EP 3 173 701 A1**
(43) Date of publication of application: **31.05.2017**
(21) Application number: 15196585.2
(22) Date of filing: 26.11.2015
(51) Int. Cl.: F24D 3/14, E04C 2/52, H05B 3/14, H05B 3/34

(54) **HEAT TRANSFER MAT, METHOD FOR MANUFACTURING A HEAT TRANSFER MAT AND METHOD FOR INSTALLING A HEAT TRANSFER MAT**

(71) Applicant: XY Climate Sverige AB, 514 31 Tranemo (SE)
(72) Inventor: Palmqvist, Lennart, 51431 Tranemo (SE)
(74) Representative: Awapatent AB

(57) **Abstract**

The present invention relates to a heat transfer mat, to a method for manufacturing a heat transfer mat, and to a method for installing a heat transfer mat. The heat transfer mat comprises a first layer and a second layer arranged on top of each other, a liquid permeable substrate comprised in the first layer, the liquid permeable substrate is covering a first area, a heat transfer arrangement comprised in the second layer, the heat transfer arrangement comprising graphite and/or graphene and is covering a second area. The first area is larger than the second area, and the second area at least partly overlaps the first area.

## Description

### Technical field

The present invention relates to a heat transfer mat, a method for manufacturing such a heat transfer mat, and to a method for installing a heat transfer mat. In particular, the invention relates to a heat transfer mat having a heat transfer arrangement.

### Background art

Heating buildings is a process which requires large amounts of heat, and thus consumes large amounts of energy. Since it is desirable to reduce the environmental impact from our society it is desirable to reduce the amount of energy required for heating. In addition, it would be desirable to reduce the amount of building material needed for installation of such heating systems and the like in order to not overcome the required energy use by simply using more raw materials for isolation.

Heating system which are perceived as efficient and comfortable often utilize a heat source (e.g. heating elements) using e.g. electricity, water, air or another medium to transport heat to a surface which is heated. In order to facilitate installation of these heating elements they may be provided in sections, or it may be possible to add material in front of, e.g. on top, of the heat source in order to efficiently spread the heat so that a uniform temperature is provided. However, a large amount of material is often needed in front of the heat source. This is expensive and it takes a lot of time to install. A known solution is therefore to provide the heat source with an integrated heat spreader. This, however, increases the cost and complexity of installing the heating system and may require professional help during installation. A corresponding discussion can be made for a cooling system using a cooling source (e.g. cooling elements) to cool a surface. In this case, heat from the surroundings is taken up by the cooled surface, which in turn transfers the heat to the cooling source via the integrated heat spreader.

Hence, it is desirable to provide a device or the like which could facilitate the installation of a heating or cooling system utilizing large surfaces in buildings as well as reducing the material used for heat spreading. Such a device should moreover be cost-effective and easy to install.

### Summary of the invention

It is an object of the present invention to improve the current state of the art and to mitigate the above mentioned problems. These and other objects are achieved by a heat transfer mat and a method for manufacturing the heat transfer mat.

According to a first aspect of the present invention a heat transfer mat is provided. The heat transfer mat comprises a first layer and a second layer arranged on top of each other; a liquid permeable substrate comprised in the first layer, the liquid permeable substrate covering a first area; a heat transfer arrangement comprised in the second layer, the heat transfer arrangement comprising graphite and/or graphene, and covering a second area; wherein said first area is larger than said second area, and said second area at least partly overlaps said first area. The heat transfer mat may be arranged for spreading heat from a heat source. The heat transfer mat may alternatively be arranged for spreading heat in a cooling system. For the latter, the surrounding will be cooled down as heat is transferred to a cooled surface which is being cooled by cooling source via the heat transfer mat.

The present invention is based on the realization that a heat transfer mat having a heat transfer arrangement covering a smaller area than its support, can combine two conflicting interests, namely efficient heat spreading (e.g. spreading heat from a heat source having heating elements), and efficient use of the heat transfer material. The heat transfer mat is moreover cost-effective and easy to install. Providing such heat transfer mat in a building, for example in floors or in walls, reduces the amount of building material, e.g. concrete or screed (also known as putty or liquid filler), needed in order to get a close to uniform temperature along the heated or cooled surface. Further, the reduced amount of building material means that a change in temperature occurs quicker since there is less mass to be heated or cooled down. Moreover the heat transfer mat can be arranged under ground in order to collect geothermal heat. The heat transfer mat can also be installed in ice-skating rinks in order to provide the ice surface with cold in a more efficient way. For the latter, the heat transfer mat efficiently spread the cooling effect from the cooling source whereby heat from the surroundings effectively can be taken up by the cooling source via the heat transfer mat.

Said heat transfer mat may also be referred to as a heat transfer spreading mat for spreading heat from a heat source (or alternatively spreading heat to a cooling source). The cooling source may e.g. comprise pipes comprising water, air or another medium which has a lower temperature than the surroundings, e.g. having a temperature below 0 degrees centigrade.

By attaching the heat transfer arrangement to a liquid permeable substrate, installation of the heat transfer mat is facilitated. Moreover, the liquid permeable substrate allows voids created close to and on both sides of the heat transfer mat to be filled with building material, e.g. concrete and screed. This will reduce the risk for stratifications in the floor and/or part of the building where the heat transfer mat is installed. Further, this may also prevent the formation of cracks due to voids, and/or the formation of cracks due to tensions when the material is heated or cooled.

It should be understood that the area covered by the liquid permeable substrate is the area projected by the liquid permeable substrate and the area covered by the heat transfer arrangement is the area projected by the heat transfer arrangement. Hence, the first and the second area are not to be understood as a respective total surface area including e.g. area of wrinkles or other curvatures that may be created in the liquid permeable substrate or in the heat transfer arrangement.

According to at least one exemplary embodiment, the first and the second area overlap each other, such that e.g. that the second area completely overlaps said first area. According to at least one example embodiment, said second area is contained in said first area.

It should be understood that the first and the second layers are arranged on top of each other, or is adjacent to each other, where adjacent here should be interpreted as that the two layers are placed on top each other, i.e. that the heat transfer arrangement is arranged on top of the liquid permeable substrate. It is of course possible to arranged the layers the other way around, i.e. that the liquid permeable substrate is arranged on top of the heat transfer arrangement.

The width of the liquid permeable substrate is typically within the range of 100 mm to 2 m and may according to one example embodiment define the total width of the heat transfer mat. The length of the liquid permeable substrate is typically within the range of 5 m to 300 m and may according to one example embodiment define the total length of the heat transfer mat.

According to at least one exemplary embodiment, said heat transfer arrangement comprises at least one heat transfer element.

Thus, the heat transfer arrangement may comprises at least one, such as e.g. only one, heat transfer element. The heat transfer element is covering a third area, which e.g. may be the same, or smaller than, the second area. Thus, the third area covered by the heat transfer element is smaller than the first area covered by the liquid permeable substrate.

In at least one exemplary embodiment, the heat transfer arrangement comprises a plurality of heat transfer elements. By a plurality of heat transfer elements it means that there can be two, three, four, five or any other number of heat transfer elements. Each heat transfer element is covering a certain area of the liquid permeable substrate. The total area covered by the heat transfer elements, which is referred to above as the second area, is smaller than the area of the liquid permeable substrate, which is referred to above as the first area.

According to at least one exemplary embodiment, the combined width of all heat transfer elements may be within the range of 2.5-99% of the width of the liquid permeable substrate. The heat transfer elements do not need to be of equal size or shape, hence, according to at least one example embodiment, the size and/or shape of at least two of the heat transfer elements differ from each other. By adding more heat transfer elements the heat transfer arrangement may cover a larger area of the heat transfer mat compared to having fewer heat transfer elements, provided that the heat transfer elements is of the same size. More heat transfer elements will make the heat spreading more efficient.

According to at least one exemplary embodiment, the heat transfer elements are arranged on the liquid permeable substrate in such a way that at least one gap is provided between at least two of the heat transfer elements. Hereby, a more flexible heat transfer mat is provided. Furthermore, the at least one gap provides for the possibility of building material to permeate at least into the heat transfer mat through the gaps. This means that more heat transfer elements may provide more gaps through which building materials may penetrate through the liquid permeable substrate.

According to at least one exemplary embodiment, the heat transfer elements are provided as elongated strips. The strips may be provided as separate strips, i.e. as separated heat transfer elements being separated by the gaps, but may additionally or alternatively be provided with interconnected means, i.e. being provided as strip portions of e.g. a single heat transfer element. For the latter, the strips, or strip portions, are still preferably separated by gaps along at least a portion of the strips or strip portions. The interconnecting means may facilitate the mounting of the heat transfer elements, e.g. the strips or strip portions, to the liquid permeable substrate by holding the strips or strip portions together. The interconnecting means may be comprised in the heat transfer arrangement and may be made in the same material as the heat transfer arrangement.

The strips or strip portions can be cut in many different ways, e.g. they can be cut with straight edges or they can be cut with undulating edges. Moreover, the strips or strip portions may be cut into many different lengths. The strips or strip portions may for example be of the same length as the heat transfer mat but they may also be shorter than the heat transfer mat.

According to at least one exemplary embodiment, the heat transfer arrangement comprises at least 50 % graphite. The heat transfer arrangement may be made from pure or almost pure graphite (e.g. the heat transfer arrangement may be completely, or almost completely, made out of graphite) but it may for example also be made from a mixture containing graphite within the range of 50 % to 99.9 %. According to at least one exemplary embodiment, the heat transfer arrangement comprises at least 50 % graphene. The heat transfer arrangement may be made from pure or almost pure graphene (e.g. the heat transfer arrangement may be completely, or almost completely, made out of graphene) but it may for example also be made from a mixture containing graphene within the range of 50 % to 99.9 %. According to at least one example embodiment, the heat transfer arrangement is made of a mixture of graphite and graphene.

The graphite may according to at least one example embodiment, be natural, exfoliated and flexible, with a density within the range of 0.8 g/cm³ to 1.8 g/cm³. The heat conductivity of the graphite is according to at least one example embodiment, within the range of 250 W/mK to 750 W/mK in the direction of a plane extending in the second layer (i.e. in the x-y-direction) but can occasionally reach up to 1500 W/mK in the x-y-direction. In the perpendicular direction (z-direction), i.e. in the normal of the plane, the heat conductivity is according to at least one example embodiment, within the range of 3 W/mK to 9 W/mK. The typical operating temperature of the heat transfer mat is according to at least one example embodiment within the range of -40 °C to 400 °C.

The width of the strips or strip portions (of graphite and/or graphene) are according to at least one example embodiment, within the range of 25 mm to 100 mm. The thickness of the strips or strip portions (of graphite and/or graphene) is according to at least one example embodiment, within the range of 0.02 mm to 0.2 mm (e.g. if graphene is used) or 0.2 mm to 0.8 mm (e.g. if graphite is used). The distance between two neighboring strips or between two neighboring strip portions is according to at least one example embodiment, within in the range of 10 mm to 100mm.

Accordingly to at least one exemplary embodiment the liquid permeable substrate comprises a plurality of holes. In other words, the liquid permeable substrate is perforated. This is advantageous as the holes facilitates for the building materials, such as e.g. screed or concrete, in their fluid form to pass through the liquid permeable substrate and thereby fill up voids that have been created close to and on both sides of the heat transfer mat.

Hence, the combined effect of having the heat transfer arrangement covering a second area being smaller than the first area of the liquid permeable substrate (such as e.g. by arranging the heat transfer arrangement as elongated strips or strip portions and/or to provide at least one gap between the heat transfer elements) and by having a plurality of holes in the liquid permeable substrate, is that building material can be applied to the heat transfer may from above (i.e. by first encountering the second layer) and still penetrate into and through the heat transfer mat (i.e. in the z-direction).

According to at least one example embodiment, the liquid permeable substrate is arranged as a mesh or as a net.

The liquid permeable substrate may be a woven or a non-woven material, such as fiberglass or polyester. The non-woven material can for example be F-32 produced by Fibertex. The size (width × height) of the holes of the liquid permeable substrate is typically within the range of 4 mm × 4 mm to 15 mm × 15 mm, but other sizes are also possible. The holes do not need to have a quadratic shape but any shape is possible such as for example that the holes is of rectangular, polygonal, circular or oval shape.

Accordingly to at least one exemplary embodiment the heat transfer mat comprises an adhesive configured to attach the heat transfer arrangement to the substrate.

Accordingly to at least one exemplary embodiment said liquid permeable substrate comprises a heat transfer arrangement facing surface, and wherein said heat transfer arrangement comprises a substrate facing surface facing said heat transfer arrangement facing surface of said liquid permeable substrate, and wherein said adhesive is arranged between said heat transfer arrangement facing surface and said substrate facing surface

Hereby the liquid permeable substrate and the heat transfer arrangement may be easily arranged on top of to each other, and be attached to each other.

The adhesive may e.g. be applied to the heat transfer arrangement facing surface and/or to the substrate facing surface. By the use of adhesive the heat transfer arrangement are attached to the liquid permeable substrate which will facilitate the installation of the heat transfer mat. The substrate and the heat transfer arrangement may be in direct contact via this adhesive, i.e. according to at least one example embodiment, there is no heat or cooling source such as en electrical wire or the like placed in between the two layers of the heat transfer mat. Types of adhesives that may be used are for example acrylic resin solutions or EVA polymer film.

According to at least one example embodiment, the heat transfer mat is a heat source free heat transfer mat, also referred to as a passive heat transfer mat.

According to a second aspect of the present invention a method for manufacturing a heat transfer mat comprising a first layer and a second layer arranged on top of each other is provided. The method comprises the steps of:
- providing a liquid permeable substrate, and a heat transfer arrangement;
- arranging the heat transfer arrangement on the liquid permeable substrate such that the heat transfer arrangement has a smaller area than the substrate,
and wherein the heat transfer arrangement comprises graphite and/or graphene, to form a heat transfer mat.

Effects and features of this second aspect of the present invention are largely analogous to those described above in connection with the first aspect of the inventive concept. Embodiments mentioned in relation to the first aspect of the present invention are largely compatible with the second aspect of the invention.

Accordingly to at least one exemplary embodiment, the method further comprises the step of attaching the heat transfer arrangement to the liquid permeable substrate by using an adhesive. The adhesive used for the arrangement can for example be applied on the liquid permeable substrate prior to cutting the heat transfer arrangement or it can alternatively or additionally be applied prior to arranging the heat transfer arrangement on top of to the liquid permeable substrate. By attaching the heat transfer arrangement to the liquid permeable substrate via the use of adhesive the heat transfer arrangement are attached to the liquid permeable substrate which will facilitate the installation of the heat transfer mat.

Accordingly to at least one exemplary embodiment the step of providing comprises providing the heat transfer arrangement on the liquid permeable substrate on a respective roll. By using a respective roll for providing the heat transfer arrangement and the liquid permeable substrate a more compact manufacturing process is achieved.

Accordingly to at least one exemplary embodiment, the method further comprises the step of cutting the heat transfer arrangement into strips or strip portions prior to attaching the heat transfer arrangement to the liquid permeable substrate. Cutting of the heat transfer arrangement may result in separate strips, but the strips may in addition or alternatively be provided with interconnected means (i.e. as strip portions). The interconnected means may be created by lifting the cutting tools. The strips can be cut in many different ways, e.g. they can be cut with straight edges or they can be cut with undulating edges. The strips may be cut into different length. The strips may for example be cut to the same length as the heat transfer mat but they may also be shorter compared to the heat transfer mat. Hereby, it should be understood that in an exemplary alternative embodiment, the heat transfer arrangement may be provided as pre-cut strips on for example a roll.

Accordingly to at least one exemplary embodiment the method further comprises the step of pressing the heat transfer arrangement on the liquid permeable substrate after the step of attaching. The pressing of the heat transfer arrangement on the liquid permeable substrate are typically done between rollers. The rollers apply a pressure on the heat transfer mat which attaches the heat transfer arrangement to the liquid permeable substrate by the use of the adhesive.

Accordingly to at least one exemplary embodiment, the method further comprises the step of rolling said heat transfer mat onto a collecting roll.

The rolled heat transfer mat may be e.g. at least 5 m long. By rolling the heat transfer mat on a roll makes the manufacturing of the heat transfer mat more compact. It also facilitates the transportation of the heat transfer mat.

A method including at least some of the example embodiments presented above will now be described. As a first step of the production of the heat transfer mat, a sheet of the heat transfer arrangement may be provided on a roll. The heat transfer arrangement may then subsequently be cut by a cutting tool into heat transfer elements or alternatively cut in such a way that the heat transfer arrangement comprises only one heat transfer element comprising elongated strips or strip portions interconnected by interconnecting means. The heat transfer elements may subsequently or simultaneously be spread over the liquid permeable substrate, which may be provided on a second roll arranged e.g. underneath the heat transfer arrangement when looking from above the process (i.e. when looking in a direction from the second layer towards the first layer). The step of providing the heat transfer arrangement on the liquid permeable substrate may comprises spreading of the heat transfer elements such that gaps are provided between the heat transfer elements. Hence, the heat transfer elements are placed on top of the liquid permeable substrate. Subsequently, pressure rolls may be used to attach the heat transfer arrangement to the liquid permeable substrate in an effective way by use of the adhesive. The adhesive may be pre-coated on the liquid permeable substrate or may be applied to the liquid permeable substrate and/or the heat transfer arrangement at any point in the process before attaching the heat transfer elements to the liquid permeable substrate. As a subsequent step in the manufacturing of the heat transfer mat, the heat transfer mat may be stretched by a stretching roll. In a further subsequent step in the manufacturing, the heat transfer mat may be rolled up on a collecting roll. By using rolls to provide the heat transfer arrangement and the liquid permeable substrate as well as the finalized heat transfer mat a more compact manufacturing process is achieved and it will also facilitate transportation of the heat transfer arrangement and the liquid permeable substrate as well as the finalized heat transfer mat.

According to a further aspect of the present invention a method for heating a building is provided. The method comprises the steps of:
- providing a heat transfer mat in accordance with the first aspect underground, and in thermal contact with a thermal transfer line, said thermal transfer line being connected to a building;
- guiding a heating medium through said thermal transfer line to exchange heat at least partly with said heat transfer mat.

Effects and features of this further aspect of the present invention are largely analogous to those described above in connection with the previous aspect(s) of the inventive concept. Embodiments mentioned in relation to the previous aspect(s) of the present invention are largely compatible with this aspect of the invention.

A thermal transfer line should be construed as e.g. piping arranged underground outdoors to collected heat comprised in the ground. By the use of a heat transfer mat according to the first aspect, the amount of thermal energy which is directed into a thermal transfer line can be increased as the surface area with which the thermal transfer line can interact is increased. The heating medium may be water, or any other suitable fluid which may be directed through piping.

According to a further aspect of the present invention a method for cooling a surface is provided. The method comprises the steps of:
- providing a heat transfer mat in accordance with the first aspect underground, and in thermal contact with a thermal transfer line, said thermal transfer line being connected to a cooling source or cooling device;
- guiding a cooling medium through said thermal transfer line to exchange heat at least partly with said heat transfer mat.

Effects and features of this further aspect of the present invention are largely analogous to those described above in connection with the previous aspect(s) of the inventive concept. Embodiments mentioned in relation to the previous aspect(s) of the present invention are largely compatible with this aspect of the invention. The cooling medium may be water, or any other suitable fluid which may be directed through piping. The cooling medium may have an anti-freezing component added. Hence, the inventive concept may also be used to cool surfaces. The surfaces may e.g. be a portion of a ice rink, or ice skating rink, or a portion of a ski slope. The cooling source or cooling device may thus be any know and suitable heat exchanger or heat pump for cooling a liquid cooling media.

According to a further aspect of the present invention a method for installing a heat transfer mat is provided. The method comprises the steps of:
- providing a heat transfer mat in accordance with the first aspect;
- arranging the heat transfer mat on a floor comprising a heat or cooling source (such as e.g. heating elements or cooling elements, respectively); and
- covering said heat transfer mat with a covering layer.

Effects and features of this further aspect of the present invention are largely analogous to those described above in connection with the previous aspect(s) of the inventive concept. Embodiments mentioned in relation to the previous aspect(s) of the present invention are largely compatible with this aspect of the invention.

The covering layer may e.g. be any type of floor or the like such as e.g. a floor mat, or a click floor or tiles or an epoxy flooring. According to at least one example embodiment, the covering layer is concrete or screed.

Thus, according to at least one example embodiment, the step of covering said heat transfer mat with a covering layer comprises:
- pouring concrete or screed on top of the heat transfer mat to form a layer or concrete or screed less than 60 mm thick.

Hence, it should be understood that without a heat transfer mat according to the inventive concept, i.e. in the current situation, the layer of screed or concrete needs to be at least 60 mm thick to provide sufficiently uniform heat spreading over the surface to be heated in a building. The layer of concrete or screed applied in the present invention may be 0-60 mm thick, or 10-50 mm, or 15-45 mm, or 20-40 mm, or 25-35mm. The step of pouring the concrete or screed should be understood as pouring or casting the concrete or screed over the heat transfer mat. The reduced thickness of the concrete or screed, as compared to the prior art, also means that there is a reduced need for concrete or screed, and that the concrete or screed dries much quicker which saves time during construction. The reduced thickness also means that there is less risk for cracks to form.

According to at least one example embodiment, the step of pouring concrete or screed on top of the heat transfer mat is carried out while the floor (of e.g. concrete) has not completely dried, i.e. the floor is still wet, or is at least still sticky. It should be understood that the term floor is the underlying floor where the heat transfer mat is arranged upon.

Hereby, a wet-to-wet installation is carried out which results in a better joining or merging of the different layers.

Alternatively, the floor has dried and the method comprises the step of applying a primer to the floor, prior to providing the heat transfer mat.

According to at least one example embodiment, the method further comprises the step of arranging tiles, or clincers or a click floor or a floor mat, or the like on top of the poured concrete or screed, or alternatively on top of the primer on the floor.

The method may further comprises the step of arranging the heat or cooling source (such as e.g. the heating or cooling elements, respectively) onto a floor, and then casting concrete or screed to at least cover the heat or cooling source to form a floor prior to the step of arranging the heat transfer mat on the floor. The reduced thickness also means that the heating may be controlled quicker as there is less mass to heat and/or cool. The heating or cooling elements may be piping for a fluid heating or cooling media, such as water, air or any other suitable matter. Alternatively, the heating elements may be electrical heating elements.

According to at least one example embodiment, the method comprises the step of arranging a vapor barrier between the heat transfer mat and the top floor, such as a click floor. The vapor barrier may e.g. be 0.1 to 0-5 mm thick, such as e.g. 0.1 to 0.3 mm thick.

Generally, all terms used in the description or claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

Further features of, and advantages with, the present invention will become apparent when studying the appended claims and the following description. The skilled person realizes that different features of the present invention may be combined to create embodiments other than those described in the following, without departing from the scope of the present invention.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Figures 1A-D are schematic perspective views of a heat transfer mat according to various example embodiments of the invention;
Figures 2a and 2b are schematic perspective views of floor system comprising the heat transfer mat according to example embodiments of the invention;
Figures 2c and 2d are schematic cross-sectional views of a floor system comprising the heat transfer mat according to example embodiments of the invention;
Figure 3 is a schematic view of the process for manufacturing a heat transfer mat according to an exemplified embodiment of the invention;
Figure 4 is a schematic view of a ground heating system utilizing the heat transfer mat according to an example embodiment of the invention; and
Figure 5 is a schematic perspective view of a wall system comprising the heat transfer mat according to an example embodiment of the invention.

### Detailed description of preferred embodiments of the invention

In the present detailed description, embodiments of the present invention will be discussed with the accompanying figures. It should be noted that this by no means limits the scope of the invention, which is also applicable in other circumstances for instance with other types or variants of heat transfer mats than the embodiments shown in the appended drawings. Further, that specific features are mentioned in connection to an embodiment of the invention does not mean that those components cannot be used to an advantage together with other embodiments of the invention.

The heat transfer mat according to the present invention is suitable e.g. for spreading heat from a heat source. The heat transfer mat may alternatively be arranged for spreading heat in a cooling system. For the latter, the surrounding will be cooled down as heat is transferred to a cooled surface which is being cooled by a cooling source via the heat transfer mat (i.e. heat is transferred from the surrounding to the heat transfer mat and to the cooling source). The heat transfer mat provides for the heat to become evenly spread over a surface. It can advantageously be installed in a floor or a wall together with a heat source, such as a heating element, using e.g. electricity, water, air or another medium. In addition, the heat transfer mat can be used to transfer heat to the cooling source.

The heat transfer mat comprises two layers; a liquid permeable substrate which according to at least one example embodiment comprises a plurality of holes, arranged in a first layer, and a heat transfer arrangement arranged in a second layer and being placed on top of to the liquid permeable substrate. The liquid permeable substrate, possibly provided with the plurality of holes, facilitates the installation of the heat transfer mat in the building, as building material such as concrete or screed easily can flow through the liquid permeable substrate (e.g. through the holes) and thereby fill up voids created underneath the heat transfer mat. By filling up the voids the risk of stratification is significantly reduced. The heat transfer arrangement may according to at least one example embodiment, be provided as separate heat transfer elements. Advantage with having separate heat transfer elements is that the permeation of building material through the heat transfer mat is facilitated. Having more heat transfer elements will in addition provide a larger area of heat transfer arrangement compared to having fewer heat transfer elements (of the same size) without losing flexibility of the heat transfer mat. The use of the heat transfer mat makes it possible to get a more even temperature over a heated or cooled surface when using less building material. By reducing the amount of building material the cost for such a floor system is reduced. Other advantages achieved by reducing the amount of building material is for example: better and quicker control of the temperature of the floor, benefits for the environment since less concrete has to be both produced and transported and therefore a lower amount of carbon dioxide will be emitted and the amount of time needed for floor installations.

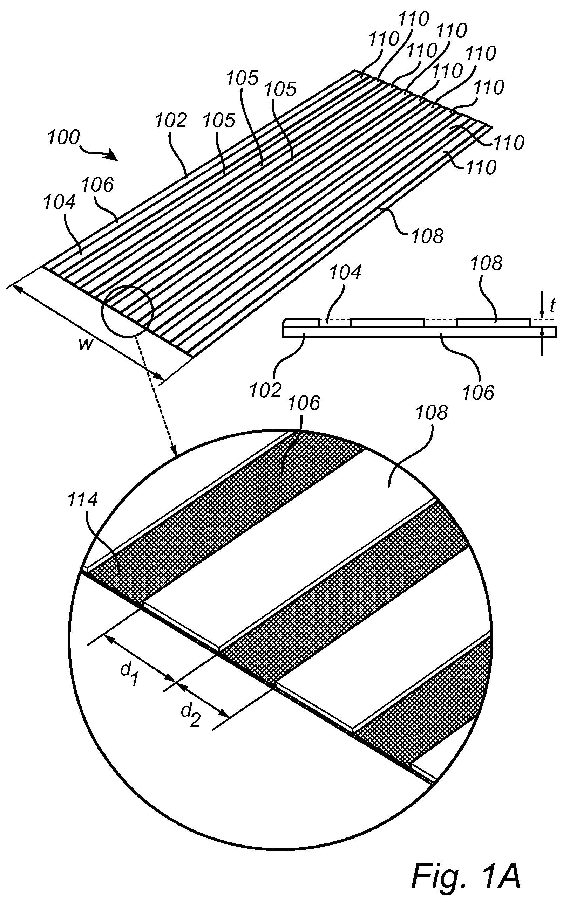

Figure 1A shows a schematic and perspective view of a heat transfer mat 100 according to at least one embodiment of present invention. The heat transfer mat 100 comprises a first layer 102 and a second layer 104. The first layer 102 comprises a liquid permeable substrate 106. The second layer 104 comprises a heat transfer arrangement 108 which in this embodiment is visualized by heat transfer elements 110 arranged with a respective distance d₂ to each other and being arranged adjacent to (i.e. on top of) the liquid permeable substrate 106. That is, the second layer 104 comprises gaps 105 of the distance d₂ between the heat transfer elements 110.

The liquid permeable substrate 106 may be a woven or a non-woven material, such as fiberglass or polyester. The non-woven material can for example be F-32 produced by Fibertex. The liquid permeable substrate in Figure 1A comprises a plurality of holes 114. The size (width × height) of the holes 114 is typically within the range of 4 mm × 4 mm to 15 mm × 15 mm. The holes 114 can for example be 7 mm × 7 mm or 10 mm × 10 mm or 12 mm × 12 mm or they can for example be between 7 mm × 7 mm and 10 mm × 10 mm or it can be between 10 mm × 10 and 12 mm × 12 mm. The holes 114 do not need to have a quadratic shape. They may for example be of a rectangular, a polygonal, a circular or an oval shape. The width W of the liquid permeable substrate 106 is typically within the range of 100 mm to 2 m and may, or may not, define the total width of the heat transfer mat 100. The width W can for example be 200 mm, 500 mm, 800 mm, 1 m, or 1.5 m or it can for example be between 200 mm and 500 mm or between 500 mm and 800 mm or between 800 mm and 1 m or between 1 m and 1.5 m. The length of the liquid permeable substrate 106 is typically within the range of 5 m to 300 m and typically defines the total length of the heat transfer mat 100. The length of the heat transfer mat 100 can for example be 10 m, 50 m, 100 m or 200 m or it can be between 10 m and 50 m or between 50 m and 100 m or between 100 m and 200 m.

The heat transfer arrangement 108 is typically of graphite and/or graphene. When graphite is used, the graphite for the heat transfer arrangement 108 may be natural, exfoliated and flexible, with a density within the range of e.g. 0.8 g/cm³ to 1.8 g/cm³. The density may for example be 1 g/cm³ or 1.3 g/cm³ or it can be between 1-1.3 g/cm³. In other embodiments of the invention other types of graphite or graphene or mixtures including graphite and/or graphene can be used as the heat transfer arrangement 108. The heat conductivity of the graphite is typically within the range of 250 W/mK to 750 W/mK in the direction of a plane extending in or parallel to the second layer 104 (this plane may also be defined as a plane in the x-y-direction in a x,y,z-coordinate system where the z-axis is extending in a direction from the first layer 102 to the second layer 104) but can occasionally reach up to 1500 W/mK in the x-y-direction. The heat conductivity in the plane, i.e. in the second layer 104, of the heat transfer mat 100 can for example be between 300 W/mK and 500 W/mK. In the perpendicular direction to the plane (i.e. in the z-direction) the heat conductivity is typically within the range of 3 W/mK to 9 W/mK, it may for example be between 5 W/mK to 7 W/mK. The operating temperature of the heat transfer arrangement 108 used in this invention is typically within the range of -40 °C to 400 °C. The operating temperature can for example be anywhere between - 20 °C and 0 °C, or between 0 °C and 20 °C, or between 20 °C and 100 °C, or between 100 °C and 200 °C or between 200 °C and 300 °C.

The width d₁ of each of the heat transfer elements 110 is typically within the range of 25 mm to 100 mm. The width d₁ of the heat transfer elements 110 can for example be 30 mm, or 50 mm or 75 mm, or be between 30 mm and 50 mm or 75 mm. The distance d₂ between two heat transfer elements 110 is typically within in the range of 10 mm to 100mm. The distance d₂ between two heat transfer elements 110 can for example be 30 mm, 50 mm or 70 mm, or be between 30 mm and 50 mm or between 50 mm and 75 mm. The combined width of the heat transfer arrangement 108 typically constitutes 2.5-99 % of the total width W of the heat transfer mat 100. For example the heat transfer arrangement 108 can constitute at least 5 %, at least 10%, at least 30 %, at least 50 % or at least 70 %, or at least 80 %, or at least 90 % of the total width W of the heat transfer mat 100.

The total area of the heat transfer arrangement 108 is smaller than the area of the liquid permeable substrate 106. The heat transfer arrangement 108 is placed on top of to the liquid permeable substrate 106, to which it is attached by the use of an adhesive (not shown in figure 1 A). The adhesive may be an acrylic resin solution or a thermo-adhesive film e.g. an EVA polymer film, when the heat transfer elements 110 are laminated to a non-woven substrate. The polymer film comprising EVA can for example be produced by Protechnic.

The thickness t of the heat transfer arrangement 108 (i.e. the extension of the heat transfer arrangement 108, such as the extension of the heat transfer element 110, in the z-direction) used in the heat transfer mat 100 is typically within the range of 0.2 mm to 0.8 mm. For example the thickness t of the heat transfer arrangement 108 can be 0.4 mm or 0.6 mm, or 0.4 mm to 0.6 mm. The second layer 104 comprising the heat transfer arrangement 108 is typically arranged on top on the first layer 102 comprising the liquid permeable substrate 106 when looking at the heat transfer mat 100 from below, i.e. when looking at the liquid permeable substrate 106 in a direction from the first layer 102 to the second layer 104. An alternative embodiment (not shown), the first layer 102 may be arranged on top of the second layer 104.

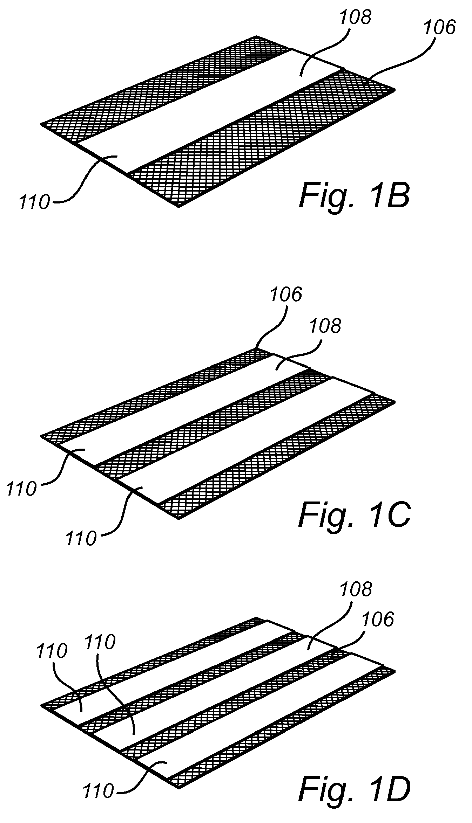

In figure 1B an embodiment of the present invention is shown where only one heat transfer element 110 constitute the heat transfer arrangement 108 attached to the liquid permeable substrate 106.

In figure 1C an embodiment of the present invention is shown where two heat transfer elements 110 constitute the heat transfer arrangement 108 attached to the liquid permeable substrate 106.

In figure 1D an embodiment of the present invention is shown where three heat transfer elements 110 constitute the heat transfer arrangement 108 attached to the liquid permeable substrate 106.

In figure 1A-D it is seen that the heat transfer mat 100 can comprise 1, 2, 3 or 9 heat transfer elements 110. Further, the heat transfer mat 100 can comprise any other number of heat transfer elements. In all of figures 1A-1D, the liquid permeable substrate 106 is covering a first area being defined by the length of the liquid permeable substrate 106 and the width W of the liquid permeable substrate 106 (here being the same as the width W of the heat transfer mat 100). Correspondingly, the heat transfer arrangement 108 is covering a second area being defined by the combined area of the heat transfer elements 110 (or as in the embodiment of figure 1B, the area of the single heat transfer element 110). The first area is larger than the second area, and the second area is at least parly overlapping the first area.

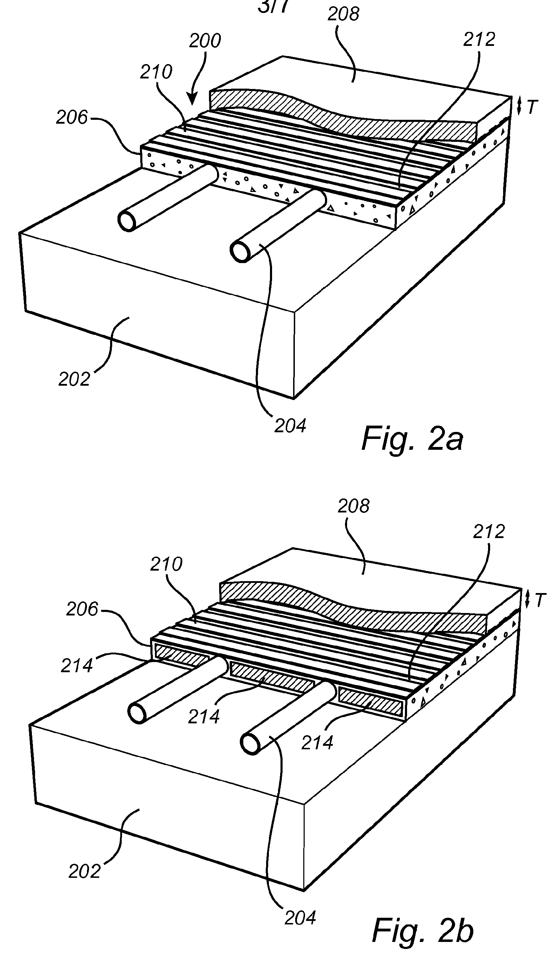

Figure 2a illustrates the heat transfer mat 200 in use when being installed into a construction or building. On a level of the floor 202, here referred as the bottom layer or an underlying floor, a heat or cooling source 204 is placed. The heat or cooling source 204 is in this embodiment of the present invention illustrated as pipes 204 configured to transfer a hot or cold medium. The heat or cooling source 204 may also be any other device providing heat or cooling. For example, if the heat or cooling source 204 is a heat source 204, electrical cords may be used. Below, it is assumed that the pipes 204 is transferring hot medium and that the heat or cooling source 204 is a heat source 204. Building material 206 such as concrete or screed fills up the space between the pipes 204 and possibly a small layer on top of the pipes 204.

The heat transfer mat 200 in figure 2a may be similar or the same as any of heat transfer mats of figure 1A-1D. Thus, the heat transfer mat 200 comprises a liquid permeable substrate 212 and a heat transfer arrangement 210 In figure 2a, the heat transfer mat 200 is placed on top of the heat source 204 in such way that the direction of the heat transfer arrangement 210 will be angular, such as e.g. perpendicularly arranged, to the pipes/heat source 204. The angle between the main direction of the heat transfer arrangement 210 and the pipes 204 is preferably between 1 and 179°, e.g. it can be between any of, or between any of, the following values 20°, 45°, 90° and/or 150°. On top of the heat transfer mat 200 more building material such as concrete or screed is typically applied, providing the heated surface 208. It is desired that the heated surface 208 has a close to uniform temperature. A close to uniform temperature is experienced as a more comfortable condition by an inhabitant, as well as being more energy efficient.

With the use of the heat transfer mat 200 the amount of building material used to create the heated surface 208 is less than compared with a situation without the heat transfer mat 200, or with a heat transfer mat where the heat transfer arrangement fully covers the support layer. Such fully covered heat transfer arrangement would require a thicker heated layer 208 to avoid stratification and or cracks. In addition the building material used here will have the possibility to permeate the liquid permeable substrate 212 reducing the risk for voids and stratifications. The heated surface 208 is typically made out of a building material such as concrete or screed. Since the building material can permeate the liquid permeable substrate 212, and in the gaps between the heat transfer elements 210, it is possible to fill the voids underneath the heat transfer mat 200, such as in between the pipes 204, with building material such as concrete or screed. Measurements done by the inventor shows that the use of the heat transfer mat 200 the thickness T of the building material on top of the heat source 204 can be reduced if compared to with a floor without said heat transfer mat 200. Without a heat transfer mat 200 the thickness T of building material on top of the heat source 204 must be at least 60 mm to get a comfortable and even temperature of the floor. By the use of the heat transfer mat 200 this is be achieved quicker, i.e. the amount of building material 204 used in order to create in such a heated surface 208 can be reduced. For example, the thickness T of the building material on top of the heat transfer mat may be less than 60 mm, such as 0-60 mm thick, or 10-50 mm, or 15-45 mm, or 20-40 mm, or 25-35mm. In at least one example, the thickness of the building material may be 10 mm. In at least one example, the total thickness of the building material 206 and the heated layer 208 is approximately 20 mm. Instead of the concrete or screed, a covering layer may be arranged on top of the heat transfer mat 200, the covering layer e.g. any type of floor or the like such as e.g. a floor mat, or a click floor or tiles or an epoxy flooring.

Figure 2b illustrates an alternative use of the heat transfer mat 200. All the embodiments presented for figure 2a is applicable for the heat transfer mat 200 in figure 2b as well. An additional feature is presented in figure 2b in the form of an isolation material 214 which is arranged in between the pipes of heat source 204. The isolation material 214 prevents, or at least reduces the risk of having heat spread in an undesired direction from the heat source 204.

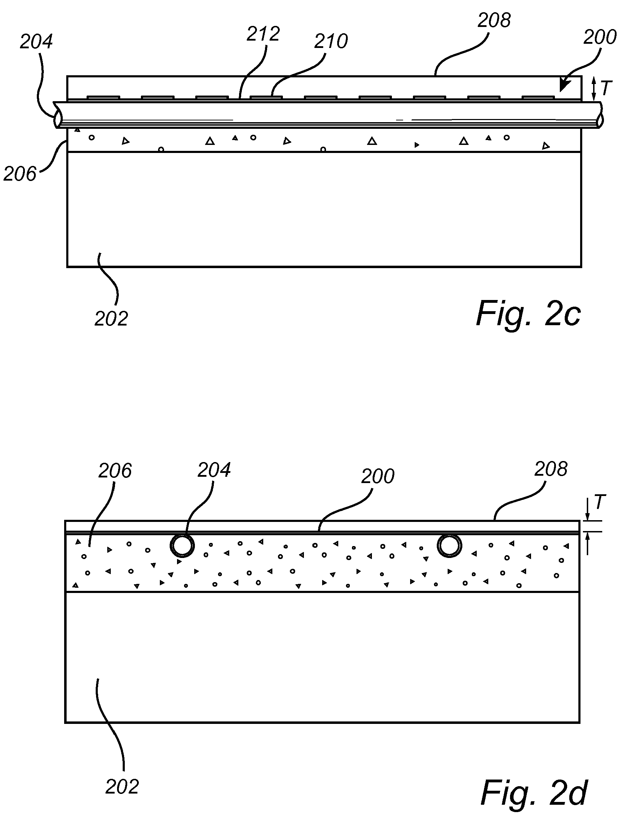

Figure 2c shows perspective cross-sectional view of the installed heat transfer mat 200 from figure 2a or figure 2b. The heat transfer mat 200 is placed on top of the heat source 204. The heat transfer elements 210 is here placed such that their main extension are perpendicular to the main extension of the pipes 204 (i.e. the heat source 204). As mentioned above, in other embodiments of the invention the heat transfer elements 210 may be positioned with another angle in respective of the pipes 204 or heat transfer source 204.

Figure 2d shows a cross-sectional view of a floor according to one embodiment of the of the installed heat transfer mat 200 from figure 2a or figure 2b. On top of a layer 202 of the floor the heat source 204 is arranged. The heat transfer mat 200 is in figure 2d arranged adjacent (or on top of) to the heat source 204. Building material such as concrete or screed is used to create a heated surface 208. By using a heat transfer mat 200 as described in present invention the amount of building material used for creating the heated surface 208 can sufficiently be reduced.

In alternative embodiments (not shown), the heated layer discussed above in conjunction with figures 2a-2d may of course be formed by another material than poured or casted concrete or screed. For example, the heated layer may be formed by laminate flooring such as click floor, or other types of wooden floors. It is appreciated by the skilled person that such embodiment are also covered by the inventive concept, and the heat transfer mat may be used to advantage with, in principle, any type of flooring. Furthermore, as indicated above, the heat source may be replaced with a cooling source for receiving heat from the surroundings (i.e. cooling the surroundings). The surface 208 will thus be a cooled surface 208.

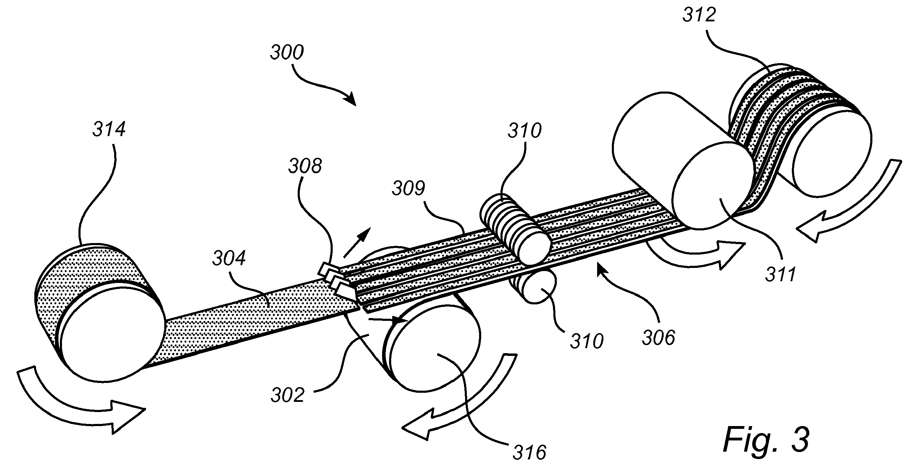

Figure 3 shows an exemplary method 300 for manufacturing of a heat transfer mat 306. At the start of the production line there is a first roll 314 providing the heat transfer arrangement 304. The heat transfer arrangement 304 can for example be exfoliated graphite but it can also be other types of graphite or mixtures of graphite or graphene. Cutting tools 308 for cutting the sheet of heat transfer arrangement 304 is provided after the first roll 314. The cutting tools 308 may comprise knives that cut the heat transfer arrangement 304. The heat transfer arrangement 304 may be cut to strips 304 with straight edges as shown in figure 3, but they might also move during the cutting process in order to create a pattern of the heat transfer arrangement 304. The pattern that is created can for example be strips with undulating edges. In another embodiment of the invention the cutting tools 308 may occasionally be lifted to create interconnecting parts between the strips (and thereby form stripe portions) of heat transfer arrangement 304. The heat transfer arrangement 304 can be cut in long or short pieces.

On a second roll 316, the liquid permeable substrate 302 is provided. In one embodiment of the invention the liquid permeable substrate 302 comprises an adhesive on the surface arranged to face the heat transfer arrangement 304. In other embodiments the adhesive is applied during the manufacture of the heat transfer mat 306. The adhesive may be provided in the process before the cutting of the heat transfer arrangement 304 or it may be provided after cutting the heat transfer arrangement 304.

In addition, the method for manufacturing 300 the heat transfer mat 306 comprises pressure rolls 310 for applying pressure for better attaching the heat transfer arrangement 304 to the liquid permeable substrate 302. A stretching roll 311 for stretching the mat is provided in the manufacturing process 300 subsequent to the pressure rolls 310. In addition, in figure 3, there is a collecting roll 312 for collecting the heat transfer mat 306.

In setup shown in figure 3, at least 5 m of the heat transfer mat 306 is produced per minute. In other embodiments of the manufacturing also at least 10 m/min or at least 20 m/min or at least 30 m/min heat transfer mat 306 be produced.

The method of the manufacturing process will now be described in more detail. As a first step in the manufacturing process of the heat transfer mat 306 a sheet of the heat transfer arrangement 304 is provided on the first roll 314. The heat transfer arrangement 304 is subsequently cut by the cutting tools 308 into heat transfer elements 309. The heat transfer elements 309 is simultaneously or subsequently spread over the width of the liquid permeable substrate 302, which is provided on the second roll 316 which is arranged underneath the heat transfer arrangement 304 when looking from above the process.

The spreading of the heat transfer elements 309 results in gaps (see e.g. Fig. 1A) between the heat transfer elements 309. The heat transfer elements 309 will be arranged on top of the liquid permeable substrate 302 and pressure rolls 310 will be used to attach the heat transfer elements 309 to the liquid permeable substrate 302 by use of the adhesive. The adhesive may be provided simultaneously as the liquid permeable substrate 302 or at any point in the process before attaching the heat transfer elements 309 to the liquid permeable substrate 302. As the second last step of the manufacturing of the heat transfer mat 306 shown in figure 3, the heat transfer mat 306 is stretched by the stretching roll 311. In the last step of the manufacturing in figure 3, the heat transfer mat 306 is rolled up on the collecting roll 312. By using rolls 314, 316, 312 to provide both the heat transfer arrangement 304 and the liquid permeable substrate 302 respectively as well as to collect the finalized heat transfer mat 306, a more compact manufacturing process is achieved and it will also facilitate transportation of the heat transfer arrangement 304 and the liquid permeable substrate 302 as well as the finalized heat transfer mat 306.

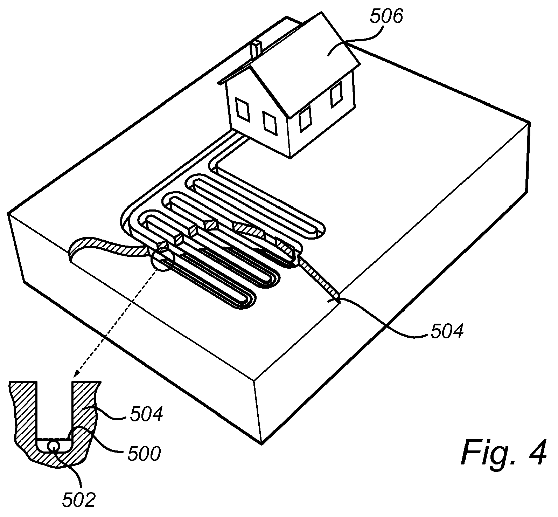

Figure 4 shows another embodiment of the present invention. The heat transfer mat 500 similar or identical to any of the previously described heat transfer mats 100, 200, 306, is buried in the ground 504. Underneath the heat transfer mat 500 there is a pipe 502 collecting geothermal energy from the ground in order to provide a house 506 with energy. The pipe 502 is connected to the house 506. The heat transfer mat 500 increases the area which can collect the geothermal energy from the ground and thereby the collection of geothermal energy is more efficient. Stated differently, the amount of geothermal energy which can be collected from a hole for burying a pipe 502 of the same size can be increased by using a heat transfer mat 500. The pipe 502 may be buried at least 1 m down in the earth.

In an additional embodiment (not shown), a heat transfer mat may be used to cool a surface, such as a portion of an ice rink or ski slope. The heat transfer mat may then be buried more shallow than indicated in figure 4, and a cooling media is instead circulated throughout pipes arranged in thermal contact with the heat transfer mat in order to more efficiently cool a surface from the pipes.

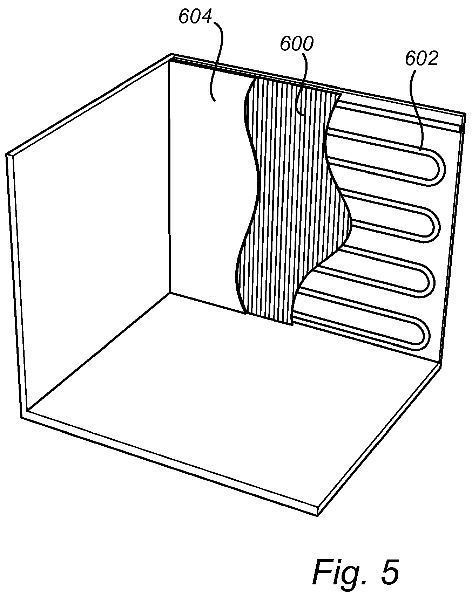

Figure 5 shows a further embodiment of the present invention where the heat transfer mat 600 similar or identical to any of the previously described heat transfer mats 100, 200, 306, is used when the heated surface 604 is a wall in a building instead of a floor. In this embodiment the heat source 602 is placed in the walls and the heat transfer mat is used to spread the heat in the walls in the same way as in the floor as described previously.

Alternatively, a heat transfer mat similar or identical to any of the previously described heat transfer mats 100, 200, 306, may be used for heating transferring heat from a heat element to a ceiling. In such an embodiment a heat source is placed in the ceiling and a heat transfer mat is used to spread the heat in the ceiling in the same way as in the floor and/or wall described above.

In general it should of course be understood that the heat transfer mat shown in figures 1-2, and the method for manufacturing a heat transfer mat shown in figure 3 are examples and may be designed slightly differently or make use of other known techniques for manufacturing or the like. For example, the heat transfer arrangement of the heat transfer mat may be arranged in another pattern than the one indicated in the appended drawings. Another usable pattern could be to provide a crossed pattern, i.e. elongated strips arranged perpendicularly, or with an angle between their respective longitudinal extensions of 15-175°. It may also be possible to use a heat transfer arrangement comprising holes punched in an otherwise continuously connected layer of graphite or graphene.

The person skilled in the art realizes that the present invention by no means is limited to the preferred embodiments described above. On the contrary, many modifications and variations are possible within the scope of the appended claims. Also, the above embodiments and variants may be combined in several ways.

## Claims

1. A heat transfer mat for comprising:
- a first layer and a second layer arranged on top of each other;
- a liquid permeable substrate comprised in said first layer, said liquid permeable substrate covering a first area;
- a heat transfer arrangement comprised in said second layer, said heat transfer arrangement comprising graphite and/or graphene and covering a second area;
wherein said first area is larger than said second area, and said second area at least partly overlaps said first area.

2. Heat transfer mat according to claim 1, wherein said heat transfer arrangement comprises a plurality of heat transfer elements.

3. Heat transfer mat according to any one of claims 1 or 2 wherein said heat transfer elements are provided as elongated strips.

4. Heat transfer mat according to any one of the preceding claims, wherein said heat transfer arrangement comprises at least 50 % graphite.

5. Heat transfer mat according to any one of the preceding claims, wherein said liquid permeable substrate comprises a plurality of holes.

6. Heat transfer mat according to any of preceding claims, comprising an adhesive configured to attach the heat transfer arrangement to the substrate.

7. Heat transfer mat according to claim 6, wherein said liquid permeable substrate comprises a heat transfer arrangement facing surface, and wherein said heat transfer arrangement comprises a substrate facing surface facing said heat transfer arrangement facing surface of said liquid permeable substrate, and wherein said adhesive is arranged between said heat transfer arrangement facing surface and said substrate facing surface.

8. Method for manufacturing a heat transfer mat comprising a first layer and a second layer arranged on top of each other, said method comprising the steps of:
- providing a liquid permeable substrate, and a heat transfer arrangement;
- arranging said heat transfer arrangement on said liquid permeable substrate such that said heat transfer arrangement has a smaller area than said substrate, and wherein said heat transfer arrangement comprises graphite and/or graphene, to form a heat transfer mat.

9. Method for manufacturing a heat transfer mat according to claim 8, further comprising the step of:
- attaching said heat transfer arrangement to said liquid permeable substrate by using an adhesive.

10. Method for manufacturing a heat transfer mat according to claim 8 or 9, wherein said step of providing comprises providing said heat transfer arrangement on said liquid permeable substrate on a respective roll.

11. Method for manufacturing a heat transfer mat according to any one of claims 8-10, further comprising the step of:
- cutting said heat transfer arrangement into strips prior to attaching the heat transfer arrangement to said liquid permeable substrate.

12. Method for manufacturing a heat transfer mat according to any one of claims 8-11, further comprising the step of:
- pressing said heat transfer arrangement on said liquid permeable substrate after said step of attaching.

13. Method for manufacturing a heat transfer mat according to any one of claims 8-12, further comprising the step of:
- rolling said heat transfer mat onto a collecting roll.

14. A method for installing a heat transfer mat, the method comprises the steps of:
- providing a heat transfer mat according to any one of claims 1-7;
- arranging the heat transfer mat on a floor comprising a heat or cooling source; and
- covering said heat transfer mat with a covering layer.

15. Method according to claim 14, wherein said step of covering comprises:
- pouring concrete or screed on top of the heat transfer mat to form a layer or concrete or screed less than 60 mm thick.
